# FASCICULE DE BREVET EUROPEEN

(11) **EP 2 981 754 B1**
(45) Date de publication et mention de la délivrance du brevet: **17.05.2017**
(21) Numéro de dépôt: 13771529.8
(22) Date de dépôt: 04.10.2013
(51) Int. Cl.: F16L 55/11, F16L 55/136, F22B 37/22, G01M 3/02, G01M 3/28

(54) **DISPOSITIF D'OBTURATION DE CANALISATION POUR L'ISOLEMENT DE BÂCHE, DE CANALISATION OU D'UN ENSEMBLE DE BÂCHES ET CANALISATIONS**
ROHRDICHTUNGSVORRICHTUNG ZUR ISOLIERUNG EINES TANKS, EINES ROHRS ODER EINER ANORDNUNG AUS TANKS UND ROHREN
PIPE-SEALING DEVICE FOR ISOLATING A TANK, A PIPE OR A SET OF TANKS AND PIPES

(30) Priorité: 03.04.2013 FR 1352998
(43) Date de publication de la demande: 10.02.2016
(73) Titulaire: Electricité de France, 75008 Paris (FR)
(72) Inventeur: NOYON, Emmanuel, F-50260 Magneville (FR)
(74) Mandataire: Regimbeau
(86) Numéro de dépôt international: PCT/EP2013/070716
(87) Numéro de publication internationale: WO 2014/161612

(56) Documents cités:
- EP-A1- 0 175 221
- FR-A1- 2 911 944
- US-A- 5 032 350
- US-A- 5 797 431
- US-A1- 2006 086 400

## Description

### DOMAINE DE L'INVENTION

La présente invention concerne un dispositif permettant d'obturer une tuyauterie, une bâche ou un ensemble de bâche(s) et canalisation(s) afin de pouvoir les isoler, notamment en vue d'opérations de maintenance, de test ou d'épreuve hydraulique.

### ETAT DE LA TECHNIQUE

De nombreuses installations industrielles comprennent des capacités (réservoir, bâches, échangeurs, etc.) couplées à des canalisations (tuyauterie) pour le passage de fluides, liquides ou gazeux, souvent sous pression. Pour garantir un fonctionnement fiable et sécurisé de ces installations, la maintenance de tels systèmes nécessite de réaliser régulièrement des tests d'étanchéité et la réglementation des appareils à pression impose en outre de réaliser périodiquement des épreuves hydrauliques.

Pour la réalisation de tests d'étanchéité ou d'épreuves hydrauliques de réservoirs, bâches, ou tous autres types de capacités, il est aujourd'hui nécessaire de modifier la configuration de l'installation pour créer une « bulle » de test ou d'épreuve, c'est-à-dire la création d'un espace confiné permettant la mise sous pression de la capacité en vue de son évaluation technique, notamment en termes d'étanchéité.

Pour la création de cette espace confiné, il est donc nécessaire de pouvoir obturer chacune des entrées/sorties de la bâche, notamment lorsqu'elles sont couplées à une canalisation, afin d'isoler le volume interne de la bâche.

Pour ce faire, il est possible d'utiliser les organes de robinetterie associés à la bâche au niveau des entrées/sorties. Toutefois, il n'existe en général pas d'organe de robinetterie au niveau de chaque canalisation. En outre, il est en général nécessaire de vérifier et s'assurer du bon fonctionnement de chaque organe de robinetterie avant tout test ou épreuve hydraulique, et de garantir son étanchéité. Enfin, les technologies de robinetterie généralement en place sur les bâches ne sont souvent pas adaptées pour obtenir l'étanchéité parfaite nécessaire à un test ou à une épreuve hydraulique, et les organes de robinetterie ne sont pas systématiquement dimensionnés pour résister à la mise sous pression pendant les tests ou épreuves hydrauliques.

Lorsque l'une des canalisations n'est pas pourvue d'un tel organe de robinetterie, ou que celui-ci n'est pas adapté pour les contraintes des tests ou épreuves hydrauliques, une solution consiste à utiliser un obturateur adapté pour l'isolation de la bâche. Toutefois, dans les industries utilisant des fluides dits dangereux (toxiques, inflammables, explosifs, etc.) ou des fluides chauds (par exemple vapeur), les capacités et tuyauteries sont dépourvues de brides qui auraient permis, après démontage, de poser des tapes (fonds pleins, brides pleines) boulonnées, permettant l'obturation. Ainsi, il est généralement nécessaire de couper la canalisation et de souder un organe d'obturation au niveau de la section coupée de la canalisation.

Malheureusement, une telle technique d'obturation des canalisations présente un grand nombre d'inconvénients. Tout d'abord, une telle solution implique une mise en oeuvre complexe, générant une intervention de longue durée, nécessitant des ressources humaines spécifiques rares (soudeurs, contrôleurs, etc.) et des besoins importants en logistique matérielle (ponts roulants, échafaudage, sas, décalorifugeage, etc.). L'intervention comprend également des risques d'aléas importants de mise en oeuvre (défauts, malfaçon, etc.). Enfin, la mise en oeuvre de cette solution sur certaines installations (notamment celles soumises à des réglementations particulières), nécessite de réaliser des dossiers réglementaires spécifiques et de réaliser des contrôles spécifiques, comme par exemple des contrôles radiographiques. Ces contrôles présentent, quant à eux des risques non négligeables d'un point de vue radioprotection et interdisent toute co-activité.

Une solution pour éviter ces inconvénients liés à l'utilisation d'obturateurs soudés, consiste à utiliser des dispositifs d'obturation existants et à les positionner dans la canalisation pour l'obturer. La demande internationale publiée le 20 janvier 2000 sous la référence WO 00/03172 décrit un certain nombre de modes de réalisation d'obturateurs à bride destinés à être positionnés à l'extrémité de la canalisation. De tels obturateurs sont robustes et permettent de résister à des pressions élevées mais leur manutention reste très complexe, notamment lorsque les canalisations à obturer et isoler ont de grands diamètres. Dans le cas où le diamètre de la tuyauterie à obturer est plus important que le diamètre du trou d'homme de la capacité où est raccordée la tuyauterie, il est nécessaire de couper la tuyauterie pour introduire l'obturateur. Par ailleurs, l'étanchéité intrinsèque de tels obturateurs ne peut être vérifiée ni contrôlée au cours des tests d'étanchéité de la conduite ce qui peut fausser les résultats du test le cas échéant. Il faut également noter le risque important d'endommager la tuyauterie à cause du système de griffes.

Il a également été proposé une solution d'obturateur dans la demande de brevet américain publiée le 27 avril 2006 sous la référence US 2006/0086400. Un tel dispositif d'obturation permet d'obturer et isoler une canalisation pour réaliser des tests d'étanchéité et la configuration spécifique de l'obturateur permet en outre de contrôler l'étanchéité intrinsèque de l'obturateur. Toutefois, la solution proposée n'est pas adaptée pour de grands diamètres de canalisation, et ne peut résister aux fortes pressions des tests d'étanchéité ou épreuves hydrauliques. La structure d'un tel obturateur est en outre complexe et massive, rendant sa mise en place et mise en oeuvre plus difficile.

En outre, la pluplart des solutions d'obturation existantes ont l'inconvénient de nécessiter de couper la canalisation qui doit être obturée pour isoler la bâche et former ainsi l'espace confiné nécessaire au test. Le document US 5,032,350 propose un dispositif de fermeture de buse dans un générateur de vapeur nucléaire comportant un trou d'homme, ce dispositif étant formé d'une pluralité de segments de fermeture qui sont dimensionnés de manière à pouvoir passer individuellement à travers le trou d'homme, ces segments pouvant être assemblés pour former le dispositif de fermeture ayant des dimensions adaptées pour obturer la buse et comprenant en outre des éléments de maintien en position du dispositif de fermeture dans la buse.

Un but de la présente invention est donc de proposer un dispositif d'obturation de canalisation permettant de résoudre au moins l'un des inconvénients précités.

En particulier, un but de la présente invention est de proposer un dispositif d'obturation qui peut être mis en place dans une canalisation d'une capacité, telle qu'une bâche, sans avoir à couper ladite canalisation. Le dispositif d'obturation a un diamètre final après montage supérieur au diamètre de l'orifice de la bâche par lequel il aura été introduit.

Un autre but de la présente invention est de proposer un dispositif d'obturation dont la mise en place est simple, ne nécessitant pas de qualification humaine spécifique et différente des opérations de maintenance habituelles.

Encore un but de la présente invention est de proposer un dispositif d'obturation pouvant être agencé dans des canalisations ayant un grand diamètre (typiquement supérieur à 1000 mm) et de pouvoir positionner l'obturateur dans n'importe quel tronçon droit de la tuyauterie, et qui est en outre adapté pour résister aux contraintes imposées par des tests ou épreuves hydrauliques, notamment en termes de pression.

Encore un autre but de l'invention est de proposer un dispositif d'obturation dont la mise en place dans les canalisations est simple, et dont le maintien dans la canalisation est simple, efficace, et réalisable en toute portion de la canalisation. Le dispositif d'obturation est suffisamment robuste et maintenu en position pour permettre des tests de canalisations à haute pression.

### EXPOSE DE L'INVENTION

A cette fin, on propose un dispositif d'obturation tel que défini à la revendication 1.

Le fait d'avoir des éléments d'assemblage ayant au moins deux dimensions d'une longueur plus faible que le diamètre du corps principal cylindrique permet une manutention de ces pièces d'assemblage à travers des orifices qui ont des dimensions plus faibles que le diamètre du corps principal, et donc plus faibles que le diamètre de la canalisation.

L'agencement et la configuration des patins antidérapants garantissent un maintien de l'obturateur sans nécessiter un organe de maintien complémentaire, ce qui est particulièrement avantageux puisque cela permet de positionner l'obturateur dans n'importe quelle portion de canalisation et pas uniquement à son extrémité.

Des aspects préférés mais non limitatifs de ce dispositif d'obturation, pris seuls ou en combinaison selon les revendications, sont les suivants :
- chaque patin antidérapant est monté sur un système de mise en compression, tel qu'un système de vérins ou un système vis-vérins, comprenant un système de blocage empêchant une translation du patin antidérapant après déploiement du patin antidérapant sur la paroi interne de la canalisation.
- le dispositif comprend outre un système anti-extrusion prévu pour empêcher une translation du dispositif d'obturation dans la canalisation en cas de défaillance du système de maintien en position, ledit système anti-extrusion comprenant des éléments de blocage agencés pour être activés lors d'un mouvement de translation du dispositif d'obturation dans la canalisation.
- chaque élément de blocage du système anti-extrusion est un rouleau monté sur excentrique par rapport à un patin antidérapant du système de maintien, et ayant une surface de contact destinée à être en contact avec la paroi interne de la canalisation.
- l'ensemble des patins antidérapants forment une surface de contact globale s'étendant sur la totalité de la périphérie de la section du cylindre définissant la forme du corps principal.
- les au moins deux dimensions parmi les trois ont une longueur inférieure ou égale à la moitié du deuxième diamètre, de préférence inférieure ou égale au tiers du deuxième diamètre.
- le corps principal est segmenté selon des cordes de la section circulaire du cylindre, plusieurs des éléments d'assemblage formant des segments circulaires du cylindre.
- lequel le corps principal est segmenté selon des rayons de la section circulaire du cylindre, plusieurs des éléments d'assemblage formant des secteurs circulaires du cylindre.
- le corps principal est en outre segmenté selon la section du cylindre de sorte à former plusieurs cylindres élémentaires dont l'assemblage forme le cylindre du corps principal.
- le corps principal comprend des joints d'étanchéité intrinsèque, chaque joint d'étanchéité intrinsèque étant agencé entre deux cylindres élémentaires adjacents.
- le corps principal est segmenté en au moins trois cylindres élémentaires, chaque cylindre élémentaire étant segmenté en au moins trois éléments d'assemblage.
- les différents patins antidérapants du système de maintien sont montés dans des éléments d'assemblage formant l'un des cylindres élémentaires.
- les éléments de joint d'étanchéité comprennent au moins deux joints gonflables destinés à être positionnés autour du cylindre formant le corps principal.
- le dispositif comprend en outre un système d'instrumentation prévu pour commander et contrôler la pression dans les joints gonflables et dans chaque espace inter-joint formé entre deux joints gonflables adjacents et les parois du corps principal et de la conduite.
- chaque élément d'assemblage a une structure alvéolée.

Selon un aspect particulier, ce dispositif d'obturation est utilisé dans une bâche ayant un trou d'homme pour la manutention des éléments d'assemblage, le trou d'homme ayant un diamètre compris entre 400 mm et 600 mm, en vue de l'obturation d'une canalisation ayant un diamètre compris entre 1000 mm et 2000 mm.

### DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :
- la figure 1 est une vue schématique d'une bâche comprenant plusieurs canalisations pourvues de différents types d'obturateurs ;
- la figure 2 est une représentation schématique de la structure du corps principal de l'obturateur selon un mode de réalisation de l'invention ;
- la figure 3 est une vue en coupe de l'obturateur selon un premier mode de réalisation de l'invention placé à l'intérieur d'une canalisation à obturer ;
- la figure 4 est une vue schématique d'une bâche comprenant l'obturateur selon l'invention avec un système d'instrumentation ;
- la figure 5 est une vue en coupe de l'obturateur selon un deuxième mode de réalisation de l'invention placé à l'intérieur d'une canalisation à obturer ;
- la figure 6 est une vue de l'obturateur de la figure 5 selon la plan A-A, représentant le dispositif de maintien en position ;
- la figure 7 est une vue en perspective de l'obturateur de la figure 5 ;
- la figure 8 est une représentation schématique, vue de côté, du système anti-extrusion de l'obturateur selon l'invention ;
- la figure 9 est une représentation schématique, vue de face, du système anti-extrusion de la figure 8.

### DESCRIPTION DETAILLEE DE L'INVENTION

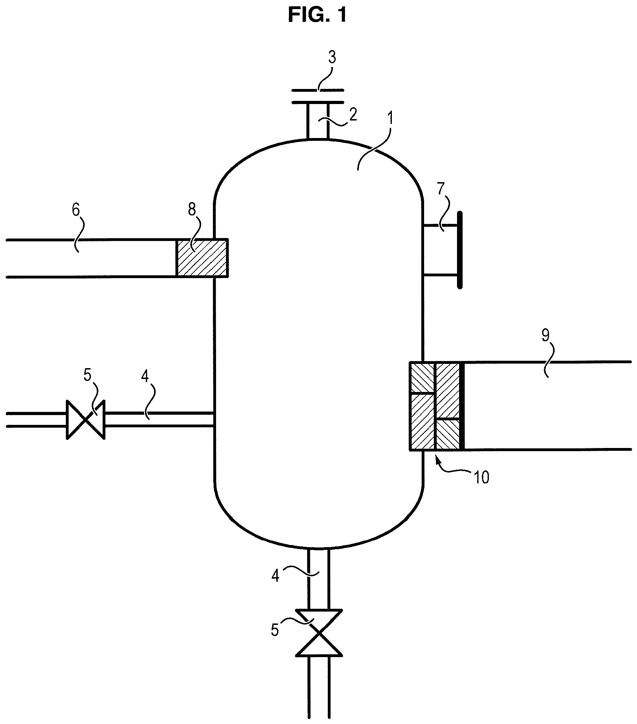

Sur la figure 1 est illustrée une capacité telle qu'une bâche 1 qui pourrait être utilisée dans tout type d'installation industrielle, comme par exemple à l'intérieur d'une centrale nucléaire, afin de canaliser et stocker un fluide, sous forme liquide ou gazeuse. Cette bâche 1 comprend plusieurs entrées/sorties, généralement reliées à des canalisations permettant la circulation du fluide vers ou depuis ladite bâche 1. Les bâches peuvent avoir des dimensions et volume associé très variés, mais elles ont en général un volume interne compris entre 2 et 800 m³, pouvant dans ce dernier cas avoir une longueur de l'ordre de 30 m pour un diamètre de 6 m.

La figure 1 illustre en outre différentes solutions d'obturation desdites entrées/sorties, et met notamment en avant les solutions existantes de l'art antérieur présenté plus haut.

Ainsi, la bâche 1 comprend une canalisation 2 ayant une bride de fixation sur laquelle il est possible de fixer un fond plein 3 permettant d'obturer ladite canalisation 2.

Sont également représentées deux canalisations 4 pourvues de vannes 5 présentes en permanence, notamment pour la régulation du flux de fluide, et qui peuvent donc être utilisées pour fermer ces canalisations 4 et isoler le volume interne de la bâche 1.

La canalisation 6 est d'un seul tenant avec la bâche 1 et ne peut donc pas être isolée une vanne ou par un fond plein sans avoir à sectionner cette canalisation 6. Il est donc nécessaire de positionner un obturateur spécifique à l'intérieur de la canalisation 6 pour pouvoir l'obturer et ainsi isoler le volume interne de la bâche 1. Une canalisation est en particulier qualifiée « d'un seul tenant » lorsqu'elle a été soudée à une entrée/sortie de la bâche 1 avec les contrôles appropriés.

La bâche 1 comprend par ailleurs un trou d'homme 7, c'est-à-dire une ouverture, généralement circulaire, dont les dimensions permettent à une personne d'entrer à l'intérieur de la bâche 1. Un tel trou d'homme 7 peut avoir un diamètre nominal compris entre 400 mm et 600 mm, de préférence de l'ordre de 500 mm.

Si la canalisation 6 a un diamètre interne inférieur au diamètre du trou d'homme 7, il est possible de faire pénétrer un obturateur 8 adapté au diamètre de la canalisation 6 dans la cavité intérieure de la bâche 1 à travers le trou d'homme 7 qui est suffisamment grand. Il convient toutefois que cet obturateur 8 soit adapté aux contraintes physiques, notamment en termes de pression, imposées par les tests ou épreuves hydrauliques à effectuer sur la bâche 1. Il est bien évident que cette voie d'obturation n'est pas possible avec les obturateurs connus lorsque le diamètre de la canalisation 9 est supérieur au diamètre du trou d'homme 7. Les canalisations peuvent en effet avoir un diamètre supérieur à 700 mm, par exemple compris entre 1000 mm et 2000 mm, par exemple de l'ordre de 1400 mm à 1500 mm.

Il est proposé ici un dispositif d'obturation 10 multi-éléments, démontable, chaque élément d'assemblage le composant ayant des dimensions lui permettant d'être introduit à l'intérieur de la bâche 1 à travers le trou d'homme 7, et le dispositif d'obturation 10 ayant - lorsque tous les éléments d'assemblage sont montés ensemble - des dimensions sensiblement égales aux dimensions internes de la canalisation 9.

Ainsi, le dispositif d'obturation 10 multi-éléments est un obturateur conçu pour être d'abord introduit dans la bâche 1 ou tout autre type de capacité, et pour être ensuite assemblé dans ou aux abords de la tuyauterie 9 à obturer.

Pour ce faire, l'obturateur 10 comprend une pluralité d'éléments d'assemblage qui, une fois assemblés ensemble, forment un corps principal 110 ayant sensiblement une forme de cylindre avec un diamètre inférieur au diamètre de la canalisation 9 pour permettre une insertion du dispositif d'obturation dans la cavité de la canalisation 9. Par ailleurs, des éléments de joint d'étanchéité 120 font saillie autour de la paroi latérale du corps principal 110, de manière à obturer l'espace libre formé entre le corps principal 110 et la paroi interne de la canalisation 9.

Pour pouvoir introduire l'obturateur 10 dans la bâche 1, il est nécessaire que les éléments d'assemblage aient au moins deux dimensions dont la longueur est inférieure au diamètre du trou d'homme 7. Les diamètres de canalisation de bâche 1 pouvant être jusqu'à deux à trois fois plus importantes que celui du trou d'homme 7, les deux dimensions des éléments d'assemblage peuvent avoir une longueur inférieure ou égale à la moitié du diamètre de la canalisation 9, de préférence inférieure ou égale au tiers de ce diamètre.

La segmentation du corps principal 110 de l'obturateur 10 est optimisée pour former des éléments d'assemblage faciles à manipuler, et permettant un montage simple de l'obturateur depuis l'intérieur de la bâche 1.

De préférence, le corps principal 110 est segmenté selon des cordes de la section circulaire du cylindre, parallèle à un des diamètres du cercle ou passant par le centre (la corde en question correspond alors à un diamètre).

Lorsque le corps principal 110 est segmenté selon des cordes parallèles à un des diamètres du cercle, plusieurs des éléments d'assemblage forment des segments circulaires du cylindre.

Lorsque le corps principal 110 est segmenté selon des diamètres ou des rayons du cercle, plusieurs des éléments d'assemblage forment des secteurs circulaires du cylindre.

Lorsque le cylindre formant le corps principal 110 est long, notamment lorsque sa longueur est plus grande que le diamètre du trou d'homme 7, le corps principal 110 peut aussi être segmenté selon la section du cylindre de sorte à former plusieurs cylindres élémentaires dont l'assemblage forme le cylindre du corps principal.

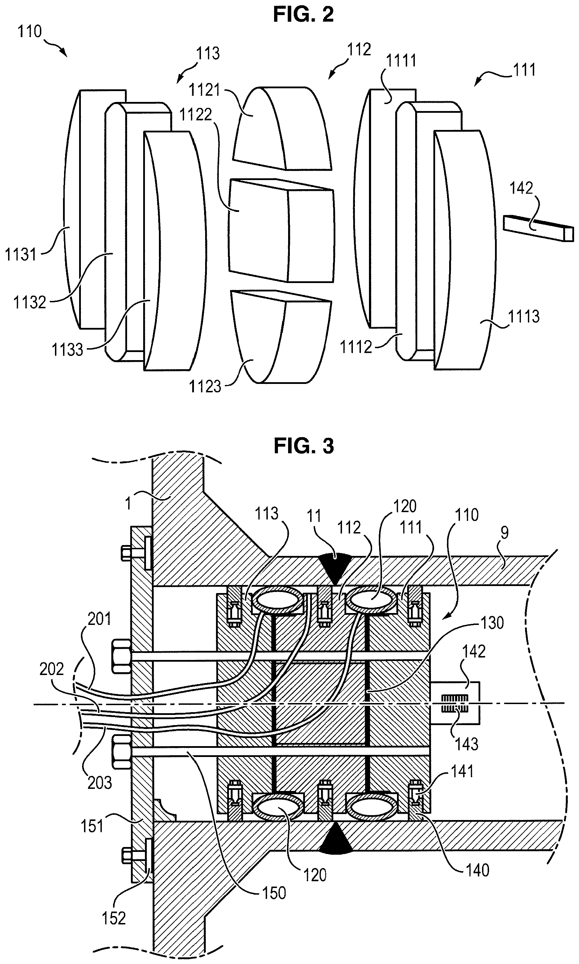

La figure 2 illustre une segmentation préférée pour le corps principal 110 de l'obturateur 10. Selon ce mode de réalisation, l'obturateur 10 est segmenté en trois cylindres élémentaires (111 ;112 ;113), chaque cylindre élémentaire (111 ;112 ;113) étant segmenté en trois éléments d'assemblage (1111,1112,1113; 1121,1122,1123 ; 1131,1132,1133).

Selon le mode de réalisation illustré à la figure 2, on constate que chaque cylindre élémentaire (111 ;112 ;113) est segmenté suivant deux cordes, décomposant les éléments d'assemblage en deux segments circulaires (1111,1113 ; 1121,1123 ; 1131,1133) et un segment central (1112 ;1122 ;1132) suivant un diamètre du cylindre.

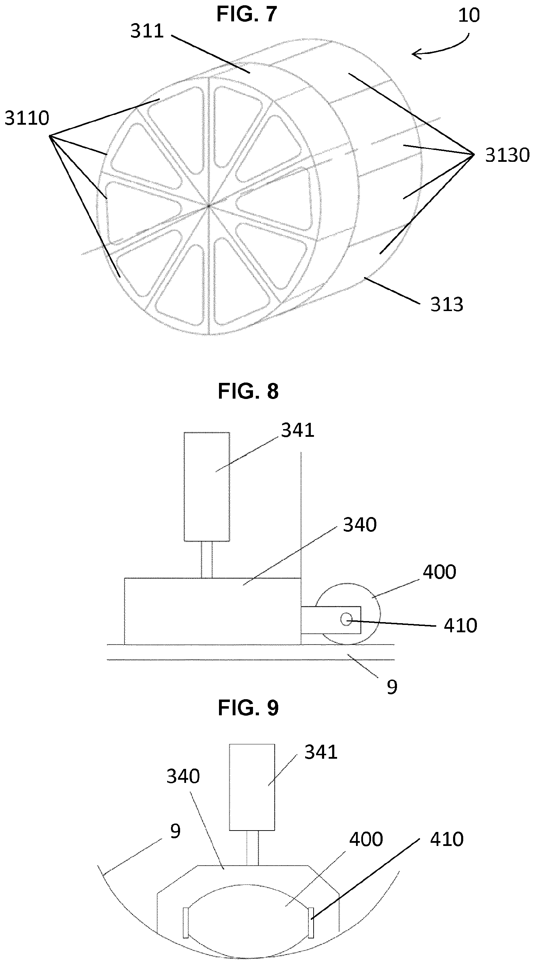

Une autre segmentation possible est illustrée à la figure 7, où l'obturateur 10 est segmenté en plusieurs cylindres élémentaires, chaque cylindre élémentaire étant segmenté selon des rayons, en des éléments d'assemblage étant des secteurs circulaires. Dans l'exemple particulier illustré à cette figure, l'obturateur 10 comprend deux cylindres élémentaires (311 ;313), chaque cylindre élémentaire étant formé de dix éléments d'assemblage sous forme de secteurs circulaires (3110 ;3130).

Chaque élément d'assemblage composant la structure du corps principal est conçu de manière à obtenir le meilleur compromis masse/résistance. On peut par exemple opter pour une structure alvéolée. Le matériau utilisé est également choisi afin d'optimiser ce compromis, et on pourra par exemple fabriquer les éléments d'assemblage en métal (inox ou titane par exemple) ou en matériaux composites. De préférence, le poids de chaque pièce formant l'obturateur est limité à 25 kg pour en faciliter sa manutention manuelle.

Par ailleurs, l'obturateur 10 peut comprendre des joints d'étanchéité intrinsèque 130, chaque joint d'étanchéité intrinsèque 130 étant agencé entre deux cylindres élémentaires adjacents pour assurer l'étanchéité globale du corps principal 110. De tels joints d'étanchéité intrinsèque 130 peuvent par exemple se présenter sous la forme de disque et/ou de tore, dans un matériau étanche comme par exemple en néoprène.

En outre, les éléments de joint d'étanchéité 120 de l'obturateur 10 comprennent de préférence au moins deux joints gonflables 120, par exemple des joints toriques ou des joints à lèvres, destinés à être positionnés autour du cylindre formant le corps principal 110.

Ces joints gonflables 120 permettent non seulement d'assurer l'étanchéité totale de l'obturateur 10, mais également de compenser les défauts géométriques ou de surface de la paroi interne de la canalisation.

De tels joints gonflables 120 peuvent être positionnés par exemple dans des gorges annulaires formées par l'assemblage des éléments d'assemblage. Il peut à cet égard être prévu une gorge annulaire sur un ou plusieurs des cylindres élémentaires. Il peut également être prévu que la gorge annulaire soit formée par l'assemblage de deux cylindres élémentaires adjacents. Dans ce dernier cas, le joint gonflable 120 présente en outre l'avantage de participer à l'étanchéité intrinsèque de l'obturateur 10 puisqu'il renforce l'étanchéité entre deux cylindres élémentaires adjacents.

En outre, l'agencement avec au moins deux joints gonflables 120 permet de créer un espace - dit espace inter-joint - formé par les deux joints gonflables adjacents et les parois du corps principal et de la conduite. En mettant sous pression cet espace inter-joint, il est possible de vérifier l'étanchéité intrinsèque de l'obturateur 10 et de garantir le bon déroulement du test de la bâche 1. A cet égard, on peut par exemple prévoir un capteur de pression agencé pour mesurer la pression au sein de cet espace inter-joint.

Cet agencement permet donc de vérifier l'étanchéité intrinsèque de l'obturateur 10 lorsqu'il a été positionné dans la canalisation 9. En outre, avec un système de suivi spécifique, il est possible de vérifier l'étanchéité de l'obturateur également pendant le test, une fois que l'espace confiné est sous pression. Ainsi, en cas de fuite pendant le remplissage ou le test de la bâche 1, on peut vérifier si elle provient en tout ou partie de l'obturateur, et répercuter la fuite mesurée par le suivi de la pression au niveau de l'espace inter-joint dans les résultats du test de bâche.

De manière générale, il existe un point de liaison entre l'entrée/sortie de la bâche 1 et la canalisation 9 associée, comme par exemple une soudure 11 telle qu'illustrée sur la figure 3. De manière préférée, on place l'obturateur 10 en amont de la soudure 11, pour éviter de devoir la tester en vue de l'épreuve de la bâche 1. Dans le cas où la longueur de la canalisation d'entrée/sortie de la bâche 1 n'est pas assez longue pour recevoir l'obturateur, il peut être avantageux de positionner l'espace inter-joint de l'obturateur 10 en regard du point de liaison 11, de sorte à pouvoir mettre en pression la soudure via la ligne de contrôle inter-joint.

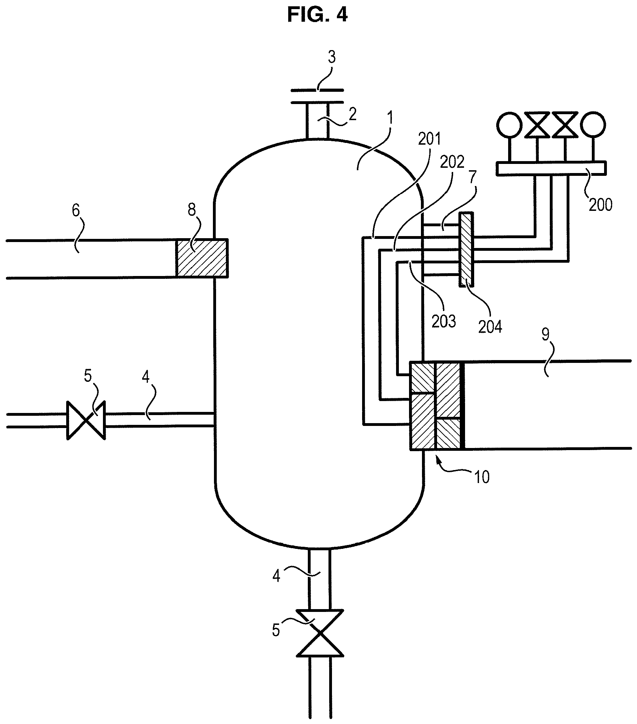

Pour le contrôle initial et/ou continu de l'étanchéité de l'obturateur 10, on peut prévoir un pupitre 200 installé en dehors de l'espace confiné de test ou d'épreuve, comme illustré à la figure 4. Ce pupitre de commande comprend des lignes d'instrumentation (201 ;202 ;203) reliées aux joints gonflables 120 et à l'espace inter-joint pour commander et contrôler la pression correspondante. Ces lignes d'instrumentation (201 ;202 ;203) peuvent par exemple passer à travers les alvéoles formées dans les éléments d'assemblage, et ressortir de la bâche 1 au niveau du trou d'homme 7 pour être connectées au pupitre de commande 20. Le passage au niveau du trou d'homme peut être réalisé grâce à un couvercle de test 204 permettant d'obturer le trou d'homme tout en permettant le passage des lignes d'instrumentation.

Le dispositif d'obturation 10 multi-éléments comprend en outre des patins antidérapants qui permettent de bloquer l'obturateur dans la canalisation 9, permettant ainsi son installation dans n'importe quelle partie droite d'un tronçon de tuyauterie raccordée au volume à tester. En effet, chaque patin antidérapant est monté sur le corps principal 110 de manière à pouvoir être contraint contre l'une des parois internes de la canalisation 9. Les patins sont de préférence conçus avec une matière d'une dureté moindre que celle de la matière des tuyauteries afin de ne pas marquer ces dernières. On peut par exemple choisir des patins antidérapants en néoprène, voire en métal d'une dureté moindre.

Chaque patin antidérapant peut en outre être couplé à un système de mesure d'effort, par exemple de type capteur d'effort ou axe dynamométrique, de manière à contrôler avec précision la contrainte appliquée par le patin antidérapant sur la paroi interne de la canalisation 9. Ce contrôle permet à la fois de garantir que l'effort est suffisant pour maintenir l'obturateur en place dans la canalisation, mais également de surveiller que la contrainte appliquée par le patin antidérapant sur la canalisation 9 ne va pas la détériorer.

La surface de contact entre le patin antidérapant et la paroi interne de la canalisation est de préférence assez importante, afin de maximiser le maintien de l'obturateur 10 dans la canalisation 9. L'ensemble des patins antidérapants forment une surface de contact globale s'étendant sur au moins la moitié de la périphérie de la section du cylindre 110 définissant la forme du corps principal, et qui correspond sensiblement à la périphérie de la section de cylindre de la paroi interne de la canalisation 9.

De manière encore préférée, la surface de contact globale des patins antidérapants s'étend sur au moins 70%, ou au moins 80%, ou au moins 90% de la de la périphérie de la section du cylindre 110 définissant la forme du corps principal.

Selon encore un mode de réalisation préféré, la surface de contact globale des patins antidérapants s'étend sur la totalité de la de la périphérie de la section du cylindre 110 définissant la forme du corps principal.

Les patins sont de préférence interchangeables.

De préférence, les efforts sur les patins 140 sont appliqués par des moyens de compression, tels qu'un système de vérins ou un système vis-vérins 141, qui permettent de contraindre les patins 140 contre les parois internes de la canalisation 9, ou de les éloigner lorsque l'obturateur 10 doit être retiré.

De préférence encore, ces patins 140 sont solidaires des vérins ou vis-vérins 141 au moyen d'une liaison de type « rotule » afin de pouvoir exercer soit un effort de compression, soit un effort de traction.

Dans le mode de réalisation illustré à la figure 3, les patins antidérapants 140 sont chacun montés sur un système vis-vérin 141. Ils permettent un maintien global de l'obturateur dans la canalisation.

Des tirants 150 peuvent compléter la retenue de l'obturateur 10 si cela s'avère nécessaire. Ces tirants 150 sont eux-mêmes reliés à un système de flasque(s) d'appui 151 dotée(s) de patins d'appui 152 réglables, de préférence antidérapants. L'obturateur est néanmoins conçu pour contrer les efforts dus à la pression sans utilisation de tirants. L'adhérence des patins antidérapants et les efforts qui leurs sont appliqués sont suffisants.

Il peut également être prévu une barre de centrage 142 pourvue également de patins antidérapants 143 à ses extrémités, cette barre de centrage 142 facilitant la pose des premiers éléments d'assemblage dans la canalisation.

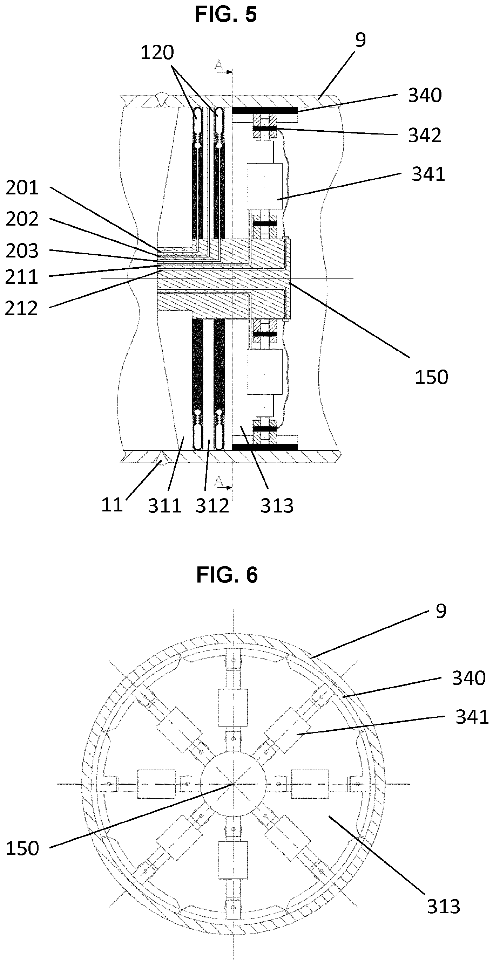

Dans le mode de réalisation illustré aux figures 5 et 6, les patins antidérapants 340 sont chacun montés sur un système de vérin 341.

Chaque patin antidérapant 340 est en outre couplé à un capteur d'effort 342 qui permet de contrôler avec précision le déploiement et la mise en contrainte du patin antidérapant 340 dans la canalisation 9.

Les moyens de compression et les moyens de mesure d'effort, étant respectivement un vérin 340 et un capteur d'effort 342 dans l'exemple des figures 5 et 6, peuvent en outre être couplés au pupitre de commande par des lignes d'instrumentation (211 ;212) dédiées.

Le vérin 341 utilisé peut en outre intégrer un système de blocage empêchant, une fois que le patin 340 a été déployé contre la paroi interne de la canalisation 9, une translation dudit patin antidérapant 340 vers une rétractation (c'est-à-dire dans le sens inverse du déploiement). Un tel système de blocage est notamment prévu pour éviter tout relâchement de la contrainte en cas de perte de pression dans le vérin 341.

Dans le mode de réalisation illustré aux figures 5 et 6, le système de maintien en position comprend plusieurs patins antidérapant 340 qui sont agencés pour que leur surface de contact s'étende sensiblement sur la totalité de la périphérie de la section du cylindre définissant l'obturateur.

Dans l'exemple illustré à la figure 6, il y a huit patins antidérapants 340, dont la surface chaque patin s'étend sur environ 45°.

Chaque patin antidérapant 340 avec son système de déploiement intégrant notamment un vérin 341 et un capteur d'effort 342, forment un élément d'assemblage 3130 de type secteur circulaire. Une fois assemblés par l'intermédiaire d'un axe central 150, ces éléments d'assemblage 3130 intégrant les patins antidérapant 340 forment un cylindre élémentaire 313 du dispositif d'obturation.

Le dispositif d'obturation comprend par ailleurs au moins un autre cylindre élémentaire 311 intégrant les joints d'étanchéité 120. Comme illustré à la figure 7, le cylindre élémentaire 311 peut être formé d'une pluralité de secteurs circulaires 3110, qui peuvent par exemple être des structures alvéolées.

L'exemple de la figure 5 met en avant une structure avec trois cylindres élémentaires (311 ;312 ;313), les joints d'étanchéité 120 étant agencés entre les différents cylindres élémentaires.

Comme indiqué plus haut, l'agencement spécifique des patins antidérapants 340 permet d'assurer un maintien de l'obturateur dans la canalisation 9, sans l'aide d'un maintien complémentaire. Cela est particulièrement avantageux puisque cela permet de positionner l'obturateur à n'importe quelle position à l'intérieur d'une portion droite de canalisation, et pas uniquement à l'extrémité de la canalisation comme c'est généralement le cas dans les obturateurs de l'art antérieur où une flasque positionnée à l'extérieur de la canalisation est nécessaire pour assurer le maintien en position.

Selon un mode de réalisation préféré, l'obturateur peut en outre comprendre un système anti-extrusion prévu pour empêcher une translation du dispositif d'obturation dans la canalisation en cas de défaillance du système de maintien en position, en particulier si l'un ou plusieurs des patins antidérapants 340 ne sont plus contraints contre la paroi interne de la canalisation 9.

Plus précisément, le système anti-extrusion comprend des éléments de blocage qui sont prévus pour s'activer dès que l'obturateur a un léger mouvement de translation dans la canalisation 9, ce qui pourrait arriver si le système de maintien avec les patins antidérapants 340 est défaillant.

Par exemple, comme illustré aux figures 8 et 9, chaque élément de blocage du système anti-extrusion peut comprendre un rouleau 400 monté sur excentrique 410 par rapport à un patin antidérapant 340 du système de maintien. Ce rouleau 400 est agencé pour avoir une surface de contact destinée à être en contact avec la paroi interne de la canalisation 9.

Ainsi, si l'obturateur venait à être déplacé en translation dans la canalisation, par exemple en cas de défaillance du système de maintien par patins antidérapants et en cas de surpression, le montage du rouleau 400 avec excentrique 410 implique que le rouleau va tourner jusqu'à venir appliquer une contrainte contre la paroi interne de la canalisation 9 stoppant la translation de l'obturateur.

Un tel système anti-extrusion peut être utilisé avec un obturateur multi-éléments tel que présenté plus haut, mais également avec tout autre type d'obturateur comprenant un système semblable de maintien en position, basé par exemple sur l'utilisation de patins antidérapants contraints contre la paroi interne de la canalisation.

A cet égard, on pourra donc prévoir un dispositif d'obturation destiné à obturer et isoler une canalisation 9 ayant une paroi interne formant une cavité sensiblement cylindrique avec un diamètre dit premier diamètre, le dispositif d'obturation comprenant :
- un corps principal 110 ayant sensiblement une forme de cylindre avec un diamètre dit deuxième diamètre, le deuxième diamètre étant inférieur au premier diamètre pour permettre une insertion du dispositif d'obturation dans la cavité ; et
- des éléments de joint d'étanchéité 120 faisant saillie autour de la paroi latérale du cylindre 110 définissant la forme du corps principal, de manière à obturer un espace libre formé entre le corps principal 110 et la paroi interne de la canalisation 9,
- un système de maintien en position, qui peut par exemple comprendre une pluralité de patins antidérapants (140 ; 340) montés en translation dans le corps principal pour être déployés contre la paroi interne de la canalisation 9 afin d'assurer un maintien du dispositif d'obturation par compression, l'ensemble des patins antidérapants formant de préférence une surface de contact globale s'étendant sur au moins la moitié de la périphérie de la section du cylindre 110 définissant la forme du corps principal, et
- un système anti-extrusion tel que présenté ci-dessus, prévu pour empêcher une translation du dispositif d'obturation dans la canalisation 9 en cas de défaillance du système de maintien en position, ledit système anti-extrusion comprenant de préférence des éléments de blocage 400 agencés pour être activés lors d'un mouvement de translation du dispositif d'obturation dans la canalisation 9.

Le montage de l'obturateur 10 dans la bâche 1 se déroule suivant les étapes générales suivantes :
1. Ouverture de la bâche 1 ;
2. Introduction dans la bâche 1 des différentes pièces qui composent l'obturateur 10 multi-éléments, à travers le trou d'homme 7 ;
3. Assemblage de l'obturateur 10 multi-éléments ;
4. Mise en place du système d'instrumentation entre l'obturateur 10 et le trou d'homme 7;
5. Mise en pression de l'obturateur 10 multi-éléments ;
6. Remplissage de la bâche 1, mise en pression de l'espace confiné, test de la bâche 1, vidange de la bâche 1 ;
7. Dépressurisation de l'obturateur 10 multi-éléments ;
8. Retrait du système d'instrumentation ;
9. Démontage de l'obturateur 10 multi-éléments ;
10. Evacuation des différentes pièces qui composent l'obturateur 10 multi-éléments, à travers le trou d'homme 7 ;
11. Fermeture de la bâche 1.

L'étape n°3 d'assemblage de l'obturateur 10 multi-éléments est détaillée ci-dessous pour le cas où l'obturateur 10 multi-éléments est assemblé directement dans la canalisation, ce qui facilite grandement sa mise en oeuvre, notamment lorsque les pièces sont lourdes et que le diamètre de la canalisation est grand.

Les étapes d'assemblage pour un obturateur tel qu'illustré aux figures 2 et 3 peuvent être les suivantes :
3-1. Assembler la barre de centrage 142 sur l'élément d'assemblage 1112 ;
3-2. Positionner l'élément d'assemblage 1112 perpendiculairement à l'axe de la tuyauterie 9, dans le sens vertical et prendre soin de bien le centrer en répartissant les jeux entre la tuyauterie et la structure des deux pièces. La répartition des jeux et le blocage se fait de préférence au moyen des vis-vérin ;
3-3. Assembler l'élément d'assemblage 1111 sur l'élément d'assemblage 1112 (par exemple avec une vis dans structure alvéolée) ;
3-4. Assembler l'élément d'assemblage 1113 sur l'élément d'assemblage 1112 (par exemple avec une vis dans structure alvéolée) ;
3-5. Appliquer l'effort nécessaire sur les patins antidérapants 140 en veillant à répartir uniformément les jeux entre les pièces et la tuyauterie 9 et vérifier les mesures d'efforts ;
3-6. Positionner un premier joint inter-disque 130 ;
3-7. Positionner un premier joint d'étanchéité gonflable 120 ;
3-8. Assembler l'élément d'assemblage 1121 sur le cylindre élémentaire 111 formé par les éléments d'assemblage (1111,1112,1113) (par exemple avec une vis dans la structure alvéolée) ;
3-9. Assembler l'élément d'assemblage 1122 sur les éléments d'assemblage 1121, 1111, 1112, 1113 (par exemple avec une vis dans la structure alvéolée) ;
3-10. Assembler l'élément d'assemblage 1123 sur les éléments d'assemblage 1121, 1122, 1111, 1112, 1113 (par exemple avec une vis dans la structure alvéolée) ;
3-11. Mettre en pression les patins antidérapants 140 contre les parois en veillant à répartir uniformément les jeux entre les pièces et la tuyauterie 9 ;
3-12. Positionner le second joint inter-disque 130 ;
3-13. Positionner le deuxième joint d'étanchéité gonflable 120 ;
3-14. Assembler l'élément d'assemblage 1131 sur le cylindre élémentaire 112 formé par les éléments d'assemblage (1121,1122,1123) (par exemple avec une vis dans la structure alvéolée) ;
3-15. Assembler l'élément d'assemblage 1132 sur les éléments d'assemblage 1131, 1121, 1122, 1123 (par exemple avec une vis dans la structure alvéolée) ;
3-16. Assembler l'élément d'assemblage 1133 sur les éléments d'assemblage 1131, 1132, 1121, 1122, 1123 (par exemple avec une vis dans la structure alvéolée) ;
3-17. Appliquer l'effort nécessaire sur les patins antidérapants 140 en veillant à répartir uniformément les jeux entre les pièces et la tuyauterie 9 et vérifier les mesures d'efforts;
3-18. Insérer les tirants 150 soigneusement à travers les éléments d'assemblage formant les cylindres élémentaires 112 et 113, et les visser dans les éléments d'assemblage formant le cylindre élémentaire 111 ;
3-19. Assembler si nécessaire le système de flasque d'appui 151 et positionner le flasque 151 en appui au moyen des patins de contact 152 sur l'entrée du piquage de la bâche 1 ;
3-20. Visser les écrous sur les tirants 150 afin de bloquer le flasque 151 d'appui.

Les étapes d'assemblage pour un obturateur tel qu'illustré aux figures 5, 6 et 7 peuvent être les suivantes :3-1. Positionner le premiers patins antidérapants 340 munis des capteurs de mesure d'effort 342 et des éléments anti-expulsions 400 ;
3-2. Positionner les premiers vérins / vis-vérins 341 ;
3-3. Positionner l'axe central 150;
3-4. Positionner les derniers patins 340 munis des capteurs de mesure d'effort 342 et vérins / vis-vérins 341 ;
3-5. Mettre en pression les vérins 341 en contrôlant les efforts au moyen des capteurs 342 ;
3-6. Positionner les premiers éléments sectoriels alvéolés d'un des cylindres élémentaires 313 ;
3-7. Positionner un premier joint d'étanchéité gonflable 120 ;
3-8. Positionner les seconds éléments sectoriels alvéolés d'un autre des cylindres élémentaires 312 ;
3-9. Positionner le second joint d'étanchéité gonflable 120;
3-10. Positionner les derniers éléments sectoriels alvéolés du dernier des cylindres élémentaires 311.

L'étape n°5 de mise en pression de l'obturateur 10 multi-éléments peut se décomposer comme suit :
5-1. Mettre en pression le premier joint d'étanchéité gonflable 120 ;
5-2. Mettre en pression le deuxième joint d'étanchéité gonflable 120 ;
5-3. Mettre en pression l'espace inter-joint ;
5-4. Vérifier la stabilité des trois pressions, afin de vérifier l'étanchéité intrinsèque de l'obturateur 10.

Comme il ressort de ce qui précède, l'obturateur 10 multi-éléments proposé est particulièrement avantageux, en premier lieu puisqu'il permet l'obturation de tout type de canalisation, quelle que soit leur diamètre, sans avoir à sectionner une telle canalisation et peut, pour une large gamme de pression, être positionné en plein tronçon de tuyauterie sans dispositif de maintien.

Il peut en effet être introduit dans n'importe quelle bâche grâce à sa structure multi-éléments, et être utilisé avec n'importe quel diamètre de tuyauterie. Le dispositif d'obturation a en effet un diamètre final après montage supérieur au diamètre de l'orifice du trou d'homme par lequel il aura été introduit.

L'obturateur a été décrit en référence à l'isolement d'une bâche, ou d'un ensemble de bâche(s) et canalisation(s), où le trou d'homme est ménagé dans la bâche. On peut également envisager d'utiliser l'obturateur pour l'isolement de canalisations seules, de grand diamètre, qui sont dotées d'un trou d'homme par lequel on pourrait introduire l'obturateur 10 multi-éléments.

Si l'obturateur proposé est particulièrement avantageux pour l'obturation de canalisations ayant des diamètres supérieurs au diamètre du trou d'homme, il peut bien entendu également être utilisé dans des canalisations avec des diamètres inférieurs au diamètre du trou d'homme. La structure multi-éléments permet en effet une manutention beaucoup plus aisée des pièces en vue du montage.

Avec un tel obturateur, les temps de pose et de retrait sont nettement inférieurs au temps de pose et de retrait d'un obturateur soudé. En outre, aucun dossier réglementaire n'est nécessaire, ni aucun contrôle non-destructif.

Par ailleurs, le besoin en logistique est très limité, et des ressources humaines de qualification « courante » sont suffisantes pour la mise en place de l'obturateur. Un tel obturateur permet également de s'affranchir de travaux par point chaud (meulage, soudure, etc.) ce qui élimine les risques d'incendie.

Un tel obturateur est en outre conçu pour résister à de fortes pression (par exemple résistance à 35 bar pour une canalisation de diamètre nominal de 1400 mm, et résistance supérieure pour des diamètres nominaux inférieurs) et sans dispositif de maintien à agencer à l'extérieur de la canalisation.

Par ailleurs, cet obturateur peut être mis en oeuvre dans tout type d'installations industrielles, y compris dans les installations à risques, comme par exemple les centrales nucléaires. Un tel obturateur peut donc être utilisé en réponse à toute problématique « d'isolement » d'un réservoir, d'une bâche, d'un échangeur ou de canalisation de tuyauterie en vue de réaliser un test d'étanchéité, une épreuve hydraulique ou toute autre opération nécessitant une étanchéité, notamment pour les tuyauteries ayant un grand diamètre nominal.

Le lecteur aura compris que de nombreuses modifications peuvent être apportées sans sortir matériellement des nouveaux enseignements et des avantages décrits ici. Par conséquent, toutes les modifications de ce type sont destinées à être incorporées à l'intérieur de la portée du dispositif d'obturation présenté.

## Revendications

1. Dispositif d'obturation prévu pour obturer et isoler une canalisation (9) ayant une paroi interne formant une cavité sensiblement cylindrique avec un diamètre dit premier diamètre, le dispositif d'obturation comprenant :
- un corps principal (110) ayant sensiblement une forme de cylindre avec un diamètre dit deuxième diamètre, le deuxième diamètre étant inférieur au premier diamètre pour permettre une insertion du dispositif d'obturation dans la cavité ; et
- des éléments de joint d'étanchéité (120) faisant saillie autour de la paroi latérale du cylindre (110) définissant la forme du corps principal, de manière à obturer un espace libre formé entre le corps principal (110) et la paroi interne de la canalisation (9),
dans lequel le corps principal (110) comprend plusieurs éléments d'assemblage (1111,1112,1113; 1121,1122,1123; 1131,1132,1133; 3110; 3130) susceptibles d'être assemblés ensemble pour former le cylindre (110) définissant la forme du corps principal, chaque élément d'assemblage (1111,1112,1113; 1121,1122,1123; 1131,1132,1133; 3110 ; 3130) ayant une forme s'inscrivant dans un volume parallélépipédique défini par trois dimensions orthogonales, dans lequel au moins deux des trois dimensions ont une longueur inférieure au deuxième diamètre,
le dispositif comprenant en outre un système de maintien en position comprenant une pluralité de patins antidérapants (140 ; 340) montés en translation dans certains des éléments d'assemblage pour être déployés contre la paroi interne de la canalisation (9) afin d'assurer un maintien du dispositif d'obturation par compression,
**caractérisé en ce que** l'ensemble des patins antidérapants forment une surface de contact globale s'étendant sur au moins la moitié de la périphérie de la section du cylindre (110) définissant la forme du corps principal, le système de maintien en position comprenant en outre des éléments de mesure d'effort (342) prévus pour mesurer l'effort appliqué par les patins antidérapants (340) sur la paroi interne de la canalisation (9).

2. Dispositif selon la revendication 1, dans lequel chaque patin antidérapant (140 ; 340) est monté sur un système de mise en compression (141 ; 341), tel qu'un système de vérins ou un système vis-vérins, comprenant un système de blocage empêchant une translation du patin antidérapant après déploiement du patin antidérapant sur la paroi interne de la canalisation (9).

3. Dispositif selon l'une quelconque des revendications 1 ou 2, comprenant en outre un système anti-extrusion prévu pour empêcher une translation du dispositif d'obturation dans la canalisation (9) en cas de défaillance du système de maintien en position, ledit système anti-extrusion comprenant des éléments de blocage (400) agencés pour être activés lors d'un mouvement de translation du dispositif d'obturation dans la canalisation (9).

4. Dispositif selon la revendication 3, dans lequel chaque élément de blocage du système anti-extrusion est un rouleau (400) monté sur excentrique (410) par rapport à un patin antidérapant (340) du système de maintien, et ayant une surface de contact destinée à être en contact avec la paroi interne de la canalisation (9).

5. Dispositif selon l'une quelconque des revendications 1 à 4, dans lequel l'ensemble des patins antidérapants forment une surface de contact globale s'étendant sur la totalité de la périphérie de la section du cylindre (110) définissant la forme du corps principal.

6. Dispositif selon l'une quelconque des revendications 1 à 5, dans lequel les au moins deux dimensions parmi les trois ont une longueur inférieure ou égale à la moitié du deuxième diamètre, de préférence inférieure ou égale au tiers du deuxième diamètre.

7. Dispositif selon l'une quelconque des revendications 1 à 6, dans lequel le corps principal (110) est segmenté selon des cordes de la section circulaire du cylindre, plusieurs des éléments d'assemblage (1111,1113 ; 1121,1123 ; 1131,1133) formant des segments circulaires du cylindre.

8. Dispositif selon l'une quelconque des revendications 1 à 7, dans lequel le corps principal (110) est segmenté selon des rayons de la section circulaire du cylindre, plusieurs des éléments d'assemblage (3110 ;3130) formant des secteurs circulaires du cylindre.

9. Dispositif selon l'une quelconque des revendications 1 à 8, dans lequel le corps principal est segmenté selon la section du cylindre de sorte à former plusieurs cylindres élémentaires (111 ;112 ;113 ;311 ;312 ;313) dont l'assemblage forme le cylindre du corps principal (110).

10. Dispositif selon la revendication 9, dans lequel le corps principal (110) comprend des joints d'étanchéité intrinsèque (130), chaque joint d'étanchéité intrinsèque (130) étant agencé entre deux cylindres élémentaires (111 ;112 ;113 ; 311 ; 312 ; 313) adjacents.

11. Dispositif selon l'une quelconque des revendications 9 ou 10, dans lequel le corps principal (110) est segmenté en au moins trois cylindres élémentaires (111 ;112 ;113 ;311 ;312 ;313), chaque cylindre élémentaire étant segmenté en au moins trois éléments d'assemblage (1111,1112,1113; 1121,1122,1123; 1131,1132,1133 ; 3110 ; 3130).

12. Dispositif selon l'une quelconque des revendications 9 à 11, dans lequel les différents patins antidérapants du système de maintien sont montés dans des éléments d'assemblage formant l'un des cylindres élémentaires (111 ;112 ;113 ;311 ;312 ;313).

13. Dispositif selon l'une quelconque des revendications 1 à 12, dans lequel les éléments de joint d'étanchéité (120) comprennent au moins deux joints gonflables (120) destinés à être positionnés autour du cylindre formant le corps principal (110).

14. Dispositif selon la revendication 13, comprenant en outre un système d'instrumentation (200) prévu pour commander et contrôler la pression dans les joints gonflables (120) et dans chaque espace inter-joint formé entre deux joints gonflables adjacents et les parois du corps principal et de la conduite.

15. Dispositif selon l'une quelconque des revendications 1 à 14, dans lequel chaque élément d'assemblage (1111,1112,1113; 1121,1122,1123; 1131,1132,1133; 3110 ; 3130) a une structure alvéolée.

16. Dispositif selon l'une quelconque des revendications 1 à 15 pour une utilisation dans une bâche (1) ayant un trou d'homme (7) pour la manutention des éléments d'assemblage, le trou d'homme (7) ayant un diamètre compris entre 400 mm et 600 mm, en vue de l'obturation d'une canalisation ayant un diamètre compris entre 1000 mm et 2000 mm.

## Patentansprüche

1. Dichtungsvorrichtung, die vorgesehen ist, um ein Rohr (9) mit einer Innenwand, die einen etwa zylindrischen Hohlraum mit einem Durchmesser, der erste Durchmesser ist, bildet, abzudichten und zu isolieren,
wobei die Dichtungsvorrichtung umfasst:
- einen Hauptkörper (110) mit einer etwa zylindrischen Form mit einem Durchmesser, der zweite Durchmesser ist, wobei der zweite Durchmesser kleiner als der erste Durchmesser ist, um ein Einsetzen der Dichtungsvorrichtung in den Hohlraum zu erlauben; und
- Dichtungselemente (120), die um die Seitenwand des Zylinders (110), der die Form des Hauptkörpers definiert, hervorstehen, um einen zwischen dem Hauptkörper (110) und der Innenwand des Rohrs (9) gebildeten Freiraum abzudichten,
wobei der Hauptkörper (110) mehrere Montageelemente (1111, 1112, 1113; 1121, 1122, 1123; 1131, 1132, 1133; 3110; 3130) umfasst, die zusammenmontierbar sind, um den Zylinder (110) zu bilden, der die Form des Hauptkörpers definiert, wobei jedes Montageelement (1111, 1112, 1113; 1121, 1122, 1123; 1131, 1132, 1133; 3110; 3130) eine Form hat, die sich in ein von drei orthogonalen Maßen festgelegtes Volumen einschreibt, wobei mindestens eines der drei Maße eine geringere Länge als der zweite Durchmesser hat,
wobei die Vorrichtung ferner ein Positionshaltesystem umfasst, das eine Vielzahl rutschfester Füße (140; 340) umfasst, die in einigen der Montageelemente verlagerbar montiert sind, um gegen die Innenwand des Rohrs (9) zu drücken, um einen Halt der Dichtungsvorrichtung durch Kompression zu gewährleisten,
**dadurch gekennzeichnet, dass** die Gruppe der rutschfesten Füße eine allgemeine Kontaktfläche bildet, die sich über mindestens die Hälfte des Umfangs des Querschnitts des Zylinders (110) erstreckt, der die Form des Hauptkörpers definiert, wobei das Positionshaltesystem ferner Kraftmesselemente (342) umfasst, die vorgesehen sind, um die von den rutschfesten Füße (340) auf die Innenwand des Rohrs (9) angewendete Kraft zu messen.

2. Vorrichtung nach Anspruch 1, wobei jeder rutschfeste Fuß (140; 340) auf einem Kompressionserzeugungssystem (141; 341) wie ein Zylindersystem oder ein Schrauben-Zylindersystem montiert ist, umfassend ein Blockiersystem, das eine Verlagerung des rutschfesten Fußes nach Drücken des rutschfesten Fußes gegen die Innenwand des Rohrs (9) verhindert.

3. Vorrichtung nach einem der Ansprüche 1 oder 2, umfassend ferner ein Antiextrusionssystem, das vorgesehen ist, um eine Verlagerung der Dichtungsvorrichtung in dem Rohr (9) bei einer Panne des Positionshaltesystems zu verhindern, wobei das Antiextrusionssystem Blockierelemente (400) umfasst, die ausgebildet sind, um bei einer Verlagerungsbewegung der Dichtungsvorrichtung in dem Rohr (9) aktiviert zu sein.

4. Vorrichtung nach Anspruch 3, wobei jedes Blockierelement des Antiextrusionssystems ein Rad (400) ist, das in Bezug zu einem rutschfesten Fuß (340) des Haltesystems auf Exzenter (410) montiert ist und eine Kontaktfläche hat, die bestimmt ist, mit der Innenwand des Rohrs (9) im Kontakt zu sein.

5. Vorrichtung nach einem der Ansprüche 1 bis 4,
wobei die Gruppe der rutschfesten Füße eine allgemeine Kontaktfläche bildet, die sich über den gesamten Umfang des Querschnitts des Zylinders (110) erstreckt, der die Form des Hauptkörpers definiert.

6. Vorrichtung nach einem der Ansprüche 1 bis 5,
wobei die mindestens zwei Maße der drei eine Länge haben, die kleiner oder gleich der Hälfte des zweiten Durchmessers, vorzugsweise kleiner oder gleich dem Drittel des zweiten Durchmessers, ist.

7. Vorrichtung nach einem der Ansprüche 1 bis 6,
wobei der Hauptkörper (110) gemäß den Rippen des kreisförmigen Querschnitts des Zylinders segmentiert ist, wobei mehrere der Montageelemente (1111, 1113; 1121, 1123; 1131, 1133) kreisförmige Segmente des Zylinders bilden.

8. Vorrichtung nach einem der Ansprüche 1 bis 7,
wobei der Hauptkörper (110) gemäß Radien des kreisförmigen Querschnitts des Zylinders segmentiert ist, wobei mehrere der Montageelemente (3110; 3130) kreisförmige Sektoren des Zylinders bilden.

9. Vorrichtung nach einem der Ansprüche 1 bis 8,
wobei der Hauptkörper gemäß dem Querschnitt des Zylinders derart segmentiert ist, das mehrere elementare Zylinder (111; 112; 113; 311; 312; 313) gebildet werden, deren Montage den Zylinder des Hauptkörpers (110) bildet.

10. Vorrichtung nach Anspruch 9, wobei der Hauptkörper (110) interne Dichtungen (130) umfasst,
wobei jede interne Dichtung (130) zwischen zwei benachbarten elementaren Zylindern (111; 112; 113; 311; 312; 313) ausgebildet ist.

11. Vorrichtung nach einem der Ansprüche 9 oder 10,
wobei der Hauptkörper (110) in mindestens drei elementare Zylinder (111; 112; 113; 311; 312; 313) segmentiert ist, wobei jeder elementare Zylinder in mindestens drei Montageelemente (1111, 1112, 1113; 1121, 1122, 1123; 1131, 1132, 1133; 3110; 3130) segmentiert ist.

12. Vorrichtung nach einem der Ansprüche 9 bis 11,
wobei die verschiedenen rutschfesten Füße des Haltesystems in Montageelementen montiert sind, die einen der elementaren Zylinder (111; 112; 113; 311; 312; 313) bilden.

13. Vorrichtung nach einem der Ansprüche 1 bis 12,
wobei die Dichtungselemente (120) mindestens zwei aufblasbare Dichtungen (120) umfassen, die bestimmt sind, um den Zylinder, der den Hauptkörper (110) bildet, positioniert zu sein.

14. Vorrichtung nach Anspruch 13, umfassend ferner ein Instrumentensystem (200), das vorgesehen ist, um den Druck in den aufblasbaren Dichtungen (120) und in jedem Zwischendichtungsraum, der zwischen zwei benachbarten aufblasbaren Dichtungen und den Wänden des Hauptkörpers und der Leitung gebildet ist, zu steuern und zu kontrollieren.

15. Vorrichtung nach einem der Ansprüche 1 bis 14,
wobei jedes Montageelement (1111, 1112, 1113; 1121, 1122, 1123; 1131, 1132, 1133; 3110; 3130) eine Wabenstruktur hat.

16. Vorrichtung nach einem der Ansprüche 1 bis 15 für eine Verwendung in einem Tank (1) mit einem Mannloch (7) für die Handhabung der Montageelemente, wobei das Mannloch (7) einen Durchmesser zwischen 400 mm und 600 mm inklusive hat, zwecks Abdichtung eines Rohrs, das einen Durchmesser zwischen 1000 mm und 2000 mm inklusive hat.

## Claims

1. Closing device for closing and isolating a pipe (9) having an inner wall forming a substantially cylindrical cavity with a so-called first diameter, the closing device comprising:
- a main body (110) having substantially a shape of a cylinder with a so-called second diameter, the second diameter being smaller than the first diameter to allow the closing device to be inserted into the cavity; and
- sealing joint elements (120) that project around the side wall of the cylinder (110) defining the shape of the main body, so as to close a free space formed between the main body (110) and the inner wall of the pipe (9),
wherein the main body (110) comprises several assembly elements (1111,1112,1113; 1121,1122,1123; 1131,1132,1133; 3110; 3130) capable of being assembled together to form the cylinder (110) defining the shape of the main body, each assembly element (1111,1112,1113; 1121,1122,1123; 1131,1132,1133; 3110; 3130) having a shape inscribed within a parallelepiped volume defined by three orthogonal dimensions, in which at least two of the three dimensions have a length smaller than the second diameter,
the device further comprising a position holding system comprising a plurality of non-slip pads (140; 340) mounted in translation in some of the assembly elements to be deployed against the inner wall of the pipe (9) in order to assure a holding of the closing device by compression,
**characterized in that** the set of non-slip pads forms an overall contact surface extending over at least half of the periphery of the section of the cylinder (110) defining the shape of the main body, the position holding system further comprising force measurement elements (342) provided to measure the force applied by the non-slip pads (340) on the inner wall of the pipe (9).

2. Device according to claim 1, in which each non-slip pad (140; 340) is mounted on a compression system (141; 341), such as a system of jacks or a screws-jacks system, comprising a blocking system preventing a translation of the non-slip pad after deployment of the non-slip pad on the inner wall of the pipe (9).

3. Device according to any one of claims 1 or 2, further comprising an anti-extrusion system provided to prevent a translation of the closing device in the pipe (9) in the event of failure of the position holding system, said anti-extrusion system comprising blocking elements (400) arranged to be activated during a translation movement of the closing device in the pipe (9).

4. Device according to claim 3, in which each blocking element of the anti-extrusion system is a roller (400) mounted eccentrically (410) with respect to a non-slip pad (340) of the holding system, and having a contact surface intended to be in contact with the inner wall of the pipe (9).

5. Device according to any one of claims 1 to 4, in which the set of non-slip pads forms an overall contact surface extending over the totality of the periphery of the section of the cylinder (110) defining the shape of the main body.

6. Device according to any one of claims 1 to 5, in which the at least two dimensions among the three have a length smaller than or equal to half of the second diameter, preferably smaller than or equal to one third of the second diameter.

7. Device according to any one of claims 1 to 6, in which the main body (110) is segmented along chords of the circular section of the cylinder, several of the assembly elements (1111,1113; 1121,1123; 1131,1133) forming circular segments of the cylinder.

8. Device according to any one of claims 1 to 7, in which the main body (110) is segmented along radiuses of the circular section of the cylinder, several of the assembly elements (3110;3130) forming circular sectors of the cylinder.

9. Device according to any one of claims 1 to 8, in which the main body is segmented along the section of the cylinder so as to form several elementary cylinders (111;112;113;311;312;313) the assembly of which forms the cylinder of the main body (110).

10. Device according to claim 9, in which the main body (110) comprises intrinsic sealing joints (130), each intrinsic sealing joint (130) being arranged between two adjacent elementary cylinders (111;112;113; 311; 312; 313).

11. Device according to any one of claims 9 or 10, in which the main body (110) is segmented into at least three elementary cylinders (111;112;113;311;312;313), each elementary cylinder being segmented into at least three assembly elements (1111,1112,1113; 1121,1122,1123; 1131,1132,1133; 3110; 3130).

12. Device according to any one of claims 9 to 11, in which the different non-slip pads of the holding system are mounted in assembly elements forming one of the elementary cylinders (111;112;113;311;312;313).

13. Device according to any one of claims 1 to 12, in which the sealing joint elements (120) comprise at least two inflatable sealing joints (120) intended to be positioned around the cylinder forming the main body (110).

14. Device according to claim 13, further comprising an instrumentation system (200) provided to command and control the pressure in the inflatable sealing joints (120) and in each inter-joint space formed between two adjacent inflatable sealing joints and the walls of the main body and the duct.

15. Device according to any one of claims 1 to 14, in which each assembly element (1111,1112,1113; 1121,1122,1123; 1131,1132,1133; 3110; 3130) has a honeycomb structure.

16. Device according to any one of claims 1 to 15 for use in a tank (1) having a manhole (7) for handling assembly elements, the manhole (7) having a diameter comprised between 400 mm and 600 mm, with a view to the sealing of a pipe having a diameter comprised between 1000 mm and 2000 mm.
